# EUROPÄISCHE PATENTANMELDUNG

(11) **EP 0 619 174 A1**
(43) Veröffentlichungstag der Anmeldung: **12.10.1994**
(21) Anmeldenummer: 94102969.6
(22) Anmeldetag: 28.02.1994
(51) Int. Cl.: B29C 65/00, B29D 22/00, B60K 15/03, B29C 45/56, B29C 51/08

(54) **Verfahren zur Herstellung von Hohlkörpern aus thermoplastischem Kunststoff**

(30) Priorität: 05.03.1993 DE 4306973
(71) Anmelder: KAUTEX WERKE REINOLD HAGEN AG, D-53229 Bonn (DE)
(72) Erfinder: Lesch, Hans-Dieter, D-53229 Bonn (DE)
(74) Vertreter: Koepsell, Helmut, Dipl.-Ing.

(57) **Zusammenfassung**

Die Erfindung betrifft ein Verfahren zum Herstellen von Hohlkörpern aus thermoplastischem Kunststoff, bei welchem zunächst wenigstens zwei Teilkörper (14,30) hergestellt und dann zu einem Gesamt-Hohlkörper zusammengefügt werden, wobei wenigstens einer der Teilkörper im Preßverfahren hergestellt und durch Schweißen oder Kleben mit wenigstens einem weiteren Teilkörper zum Hohlkörper verbunden wird.

## Beschreibung

Die Erfindung betrifft ein Verfahren zum Herstellen von Hohlkörpern aus thermoplastischem Kunststoff gemäß dem Oberbegriff des Anspruches 1.

Es ist bekannt, Hohlkörper, insbesondere Behälter aus thermoplastischem Kunststoff, unter Verwendung des Extrusions-Blasverfahrens herzustellen. Die dazu verwendeten Einrichtungen sind jedoch jedenfalls dann, wenn an die Ausgestaltung der Hohlkörper besondere Anforderungen gestellt werden, verhältnismäßig aufwendig. Sie erfordern zudem gut ausgebildetes Bedienungspersonal. Dies gilt insbesondere dann, wenn an den Hohlkörpern noch zusätzliche Teile in einem Arbeitsgang, also während des Herstellungsprozesses, angebracht werden sollen. Obwohl auf diesem Gebiet erhebliche Fortschritte gemacht worden sind, insbesondere auch bezüglich des Anbringens von Zusatzteilen innerhalb des Hohlkörpers, bewirkt letzteres in jedem Fall eine merkliche Komplizierung des Verfahrens, die ebenfalls dazu beiträgt, das Extrusions-Blasverfahren für solche Anwendungsfälle verhältnismäßig aufwendig zu machen.

Es ist zwar bekannt, Hohlkörper, insbesondere Behälter, so herzustellen, daß zunächst zwei Teile, beispielsweise Flaschenkörper und Flaschenboden, hergestellt werden, die dann in einem zusätzlichem Arbeitsgang mittels Schweißen oder Kleben miteinander verbunden werden. Dabei wird aber zum Herstellen der Einzelkörper durchweg das Spritzgießverfahren angewandt. Im Hinblick auf die Anforderungen, die an die herzustellenden Hohlkörper, beispielsweise von der Kfz-Industrie, gestellt werden, wird es jedoch in vielen Fällen nicht möglich sein, beispielsweise Tanks oder Kühlwasserbehälter, unter Anwendung des Spritzgießverfahrens herzustellen, da die dazu benutzten Kunststoffe, beispielsweise hochmolekulares Polyäthylen, zu zähflüssig sind, als daß sie ohne Schwierigkeiten in Spritzgießverfahren verarbeitet werden könnten. Hinzu kommt, daß die Herstellung der Einzelkörper im Spritzgießverfahren auch in Anbetracht der damit verbundenen Werkzeugkosten jedenfalls dann sehr aufwendig sein kann, wenn der Hohlkörper in kleineren Stückzahlen hergestellt werden soll.

Demzufolge liegt der Erfindung die Aufgabe zugrunde, das Verfahren gemäß dem Oberbegriff des Anspruches 1 so auszugestalten, daß es die Herstellung von Hohlkörpern aus thermoplastischem Kunststoff auf einfache und weniger aufwendige Weise erlaubt, wobei es auch möglich sein soll, solche Kunststoffe zu verwenden, die im Spritzgießverfahren nicht oder nur mit Schwierigkeiten zu verarbeiten sind.

Diese Aufgabe wird mit den im Kennzeichen des Anspruches 1 angegebenen Merkmalen gelöst.

Ein wesentlicher Vorteil des Preßverfahrens liegt auch darin, daß die Kunststoffmoleküle beim Fressen keine oder keine wesentliche Orientierung erfahren. Dies hat einmal den Effekt, daß keine oder nur geringe Spannungen in den durch Fressen hergestellten Teilkörper bzw. im Fertigerzeugnis entstehen. Zudem wird vermieden, daß die Teilkörper nach ihrer Herstellung wesentliche Formänderungen erfahren. Es ist somit möglich, die Teilkörper erst längere Zeit nach dem Pressen zum Fertigerzeugnis durch Kleben oder Schweißen zusammenzufügen, ohne daß die Gefahr besteht, daß sie aufgrund mittlerweile eingetretener Verformungen nicht mehr ausreichend genau zueinander passen. Überdies ist es auch beim Pressverfahren ohne weiteres möglich, durch entsprechende Dimensionierung der beim Pressvorgang zusammenwirkenden Werkzeugteile eine optimale Gestaltung und Verteilung der Wanddicke des Hohlkörpers zu erreichen, wie dies auch beim Extrusions-Blasverfahren möglich ist. Allerdings hat das Pressverfahren dabei den Vorteil, daß die zur Erzielung einer bestimmten Wanddickenverteilung erforderlichen Maßnahmen keinen zusätzlichen ins Gewicht fallenden Aufwand erfordern, da es dazu, wie bereits erwähnt, lediglich erforderlich ist, die zusammenwirkenden Werkzeugteile entsprechend auszuführen. Während des eigentlichen Formgebungsvorganges sind im allgemeinen zusätzliche Maßnahmen zur Erzielung der angestrebten Wanddickenverteilung nicht erforderlich. Allerdings ist es beispielsweise dann, wenn von plattenförmigem Material ausgegangen wird, auch möglich, die angestrebte Wanddickenverteilung am Teilkörper bzw. am Fertigerzeugnis bereits bei der Wanddickenverteilung des Ausgangsmaterials zu berücksichtigen. Letzteres ist jedoch nicht erforderlich. Vielmehr ist es ohne weiteres möglich, beispielsweise von einem Plattenmaterial mit uniformer Wanddicke auszugehen, wobei die unterschiedlichen Wanddicken des Teilkörpers bzw. des Fertigerzeugnisses erst durch den Preßvorgang hervorgerufen werden.

Es besteht natürlich auch die Möglichkeit, sämtliche Teilkörper des Gesamt-Hohlkörpers durch Pressen herzustellen. Andererseits kann aber auch so verfahren werden, daß beispielsweise ein hohler dreidimensionaler Teilkörper hergestellt wird, der mittels eines einfachen plattenförmigen - zweidimensionalen - Teilkörpers verschlossen wird. Dafür können dann ggf. entsprechend geformte bzw. durch Schneid- oder Stanzvorgänge hergestellte Plattenabschnitte verwendet werden. Ggf. besteht auch die Möglichkeit, dafür im Spritzgießverfahren hergestellte Teile zu verwenden, wenn dies aus irgendwelchen Gründen zweckmäßig ist. Welche der Möglichkeiten angewendet wird, hängt normalerweise von der Gestalt des Gesamt-Hohlkörpers und ggf. auch davon ab, ob während des Preßvorganges an wenigstens einem der Teilkörper Funktionsteile angeformt werden sollen. Es ist einer der großen Vorteile des Verfahrens gemäß der Erfindung, daß viele der beim Extrusion-Blasverfahren zusätzlich erforderlichen Arbeitsschritte und Maßnahmen überflüssig werden. So wird sich in vielen Fällen die Verwendung besonderer Einlegeteile erübrigen. Dies kann dann gelten, wenn die Möglichkeit besteht, Verbindungselemente, Schwalltöpfe oder andere Funktionsteile beim Pressen einstückig anzuformen. Auch hier kann so verfahren werden, daß die Dimensionen des Ausgangsmaterials, also beispielsweise die Wanddicke des vorerwähnten Plattenmaterials oder die Dimensionierung des Kunststoff-Postens, zweckmäßigerweise an die Gestalt des Fertigerzeugnisses zumindest in der Weise angepasst sind, daß dort, wo zum Anformen von Bereichen am Kohlkörper, die besondere Funktionen zu übernehmen haben, im Zwischenerzeugnis mehr Material zur Verfügung steht. Dies kann auch dann gelten, wenn als Zwischenerzeugnis beispielsweise ein Vollstrang verwendet wird, der direkt aus der Extrusionsöffnung eines Extruders in die Pressform extrudiert wird.

Beim Herstellen des Teilkörpers durch Spritzpressen wird das Ausgangsmaterial mittels Spritzgießen in das nur wenig geöffnete Preßwerkzeug eingebracht derart, daß der zwischen den Teilen des Preßwerkzeuges befindliche Raum nur teilweise mit Kunststoff gefüllt wird. Beim anschließenden Preßvorgang erfolgt dann die endgültige Formgebung des Ausgangsmaterials, welches dabei zu auch in jene Bereiche des Preßwerkzeuges verdrängt wird, welche beim Spritzgießvorgang noch unausgefüllt geblieben waren. Auch beim Spritzpressen wird im allgemeinen das Ausgangsmaterial bereits mehr oder weniger an die Gestalt des Fertigerzeugnisses, also des Teilkörpers angepaßt sein. Das Spritzpressen hat zudem den Vorteil, daß, da das Preßwerkzeug beim Spritzgießvorgang etwas geöffnet ist, die Fließkanäle für den Kunststoff größere Querschnitte haben als es der Fall bei vollständig geschlossenem Preßwerkzeug wäre. Es können somit auch Kunststoffe mit einer Viskosität verarbeitet werden, die für das übliche Spritzgießen zu groß wäre.

Ein weiterer wesentlicher Vorteil des Verfahrens gemäß der Erfindung besteht darin, daß auch faserverstärkter Kunststoff verwendet werden kann. Dies ist beim Extrusion-Blasverfahren im allgemeinen nicht möglich, da das Vorhandensein der Fasern die Dehnbarkeit des Materials negativ beeinflusst, so daß bei diesem Verfahren die im Extrusionsvorgang hergestellten Vorformlinge, die im allgemeinen als Hohlstrang ausgebildet sind, beim Expandieren unter innerem Überdruck aufreißen.

In der Zeichnung sind einige Ausführungsbeispiele der Erfindung im Schema dargestellt. Es zeigen:
- Fig. 1 - 3: ein Pressenwerkzeug in drei aufeinanderfolgenden Arbeitsphasen,
- Fig. 4: einen aus zwei Teilkörpern zusammengesetzten Hohlkörper, teilweise im Schnitt,
- Fig. 5: eine der Fig. 1 entsprechende Darstellung eines zweiten Pressenwerkzeuges,
- Fig. 6: die perspektivische Ansicht eines im Preßverfahren hergestellten Teilkörpers,
- Fig. 7: einen Schnitt nach der Linie VII-VII der Fig. 6 mit einem zweiten Teilkörper,
- Fig. 8 und 9: ein Spritzpreßwerkzeug in zwei aufeinanderfolgenden Arbeitsphasen.

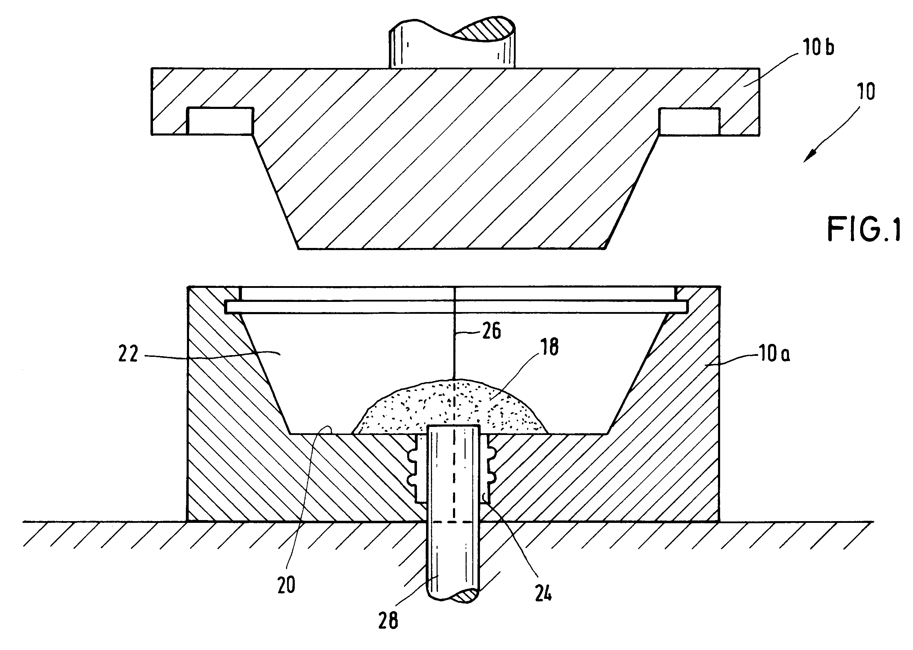

Das in den Fig. 1 - 3 dargestellten Pressenwerkzeug 10 ist in üblicherweise mit einer Matrize 10a und einem Gesenk 10b versehen. Dieses Pressenwerkzeug 10 dient zum Herstellen von Teilkörpern 14, die eine im wesentlichen rotationssymmetrische oder ähnlich gleichmäßige Gestalt aufweisen und mit einem nach außen vorstehenden Fortsatz in Form eines Gewindestutzens 16 versehen sind. In der Arbeitsphase gemäß Fig. 1 ist das Werkzeug geöffnet, um einen Kunststoff-Posten 18 aufzunehmen, der entsprechend der Gestalt des Teilkörpers 14 in Draufsicht etwa annähernd die Form eines Kreises hat und etwa mittig auf dem Boden 20 der Matritze 10a angeordnet ist. Letztere weist eine vom Boden 20 ausgehende Ausnehmung 24 auf, die zur Formgebung des Stutzens 16 dient und diesem entsprechend begrenzt ist. Innerhalb der Ausnehmung 24 ist ein Dorn 28 angeordnet, der die innere Mantelfläche des Stutzens 16 definiert. Um den im Pressenwerkzeug 10 herzustellenden Teilkörper aus der Matrize 10a herausnehmen zu können, ist letztere in der Ebene 26 zweigeteilt ausgebildet.

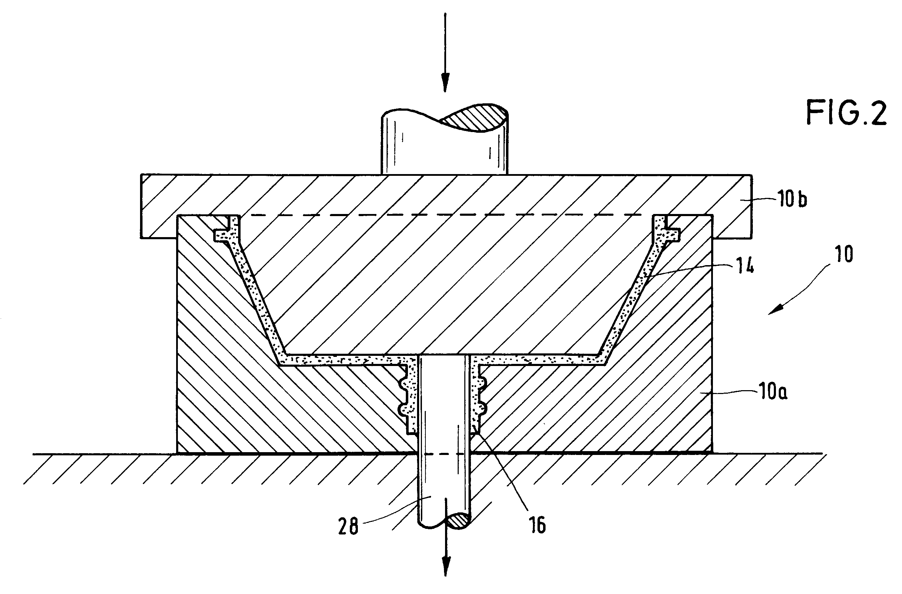

Der Kunststoff-Posten 18 ist in warmplastischem Zustand, so daß beim Absenken des Gesenkes 10b in die Matrize 10a hinein das den Posten 18 bildende Kunststoffmaterial in üblicher Weise in den in der Endlage des Gesenkes 10b verbleibenden Raum zwischen Matrize 10a und Gesenk 10b verteilt wird, wie dies Fig. 2 zeigt, wobei gleichzeitig auch Material in die innenseitig durch den Dorn 28 begrenzten Ringraum 24 zur Bildung des Stutzens 16 gepreßt wird. Fig. 2 zeigt die Betriebsphase am Ende des Preßvorganges mit dem im Pressenwerkzeug 10 befindlichen Teilkörper 14.

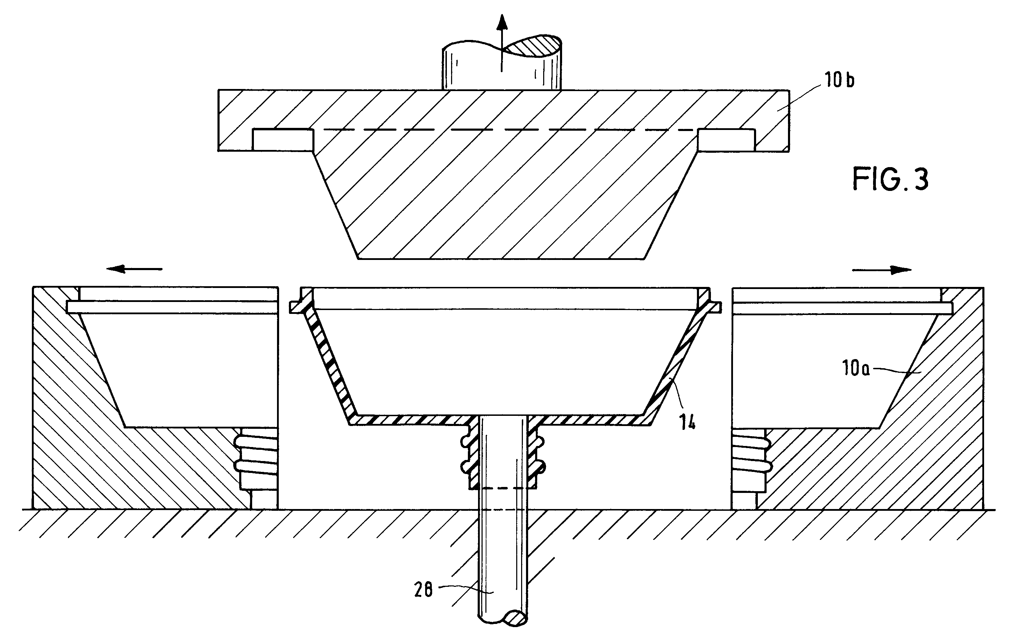

Nach ausreichender Abkühlung wird das Pressenwerkzeug durch Anheben des Gesenkes 10b und Auseinanderfahren der beiden Teile der Matrize 10a geöffnet. Die sich dabei ergebende Lage der Teile ist in Fig. 3 dargestellt. Es ist nunmehr möglich, den Teilkörper 14 nach ausreichender Abkühlung und Verfestigung vom Dorn 28 abzunehmen.

Nach Entnahme des Teilkörpers 14 aus dem gemäß Fig. 3 geöffnetem Werkzeug 10 wird die Matrize wieder in die in Fig. 1 dargestellte Position für die Aufnahme des Kunststoff-Postens 18 für den folgenden Arbeitszyklus gebracht.

Das Pressenwerkzeug 10 kann in üblicher Weise beheizt, also mit Kanälen für ein Heizmittel oder mit Heizdrähten versehen sein. Dies ist Stand der Technik und jedem Fachmann geläufig.

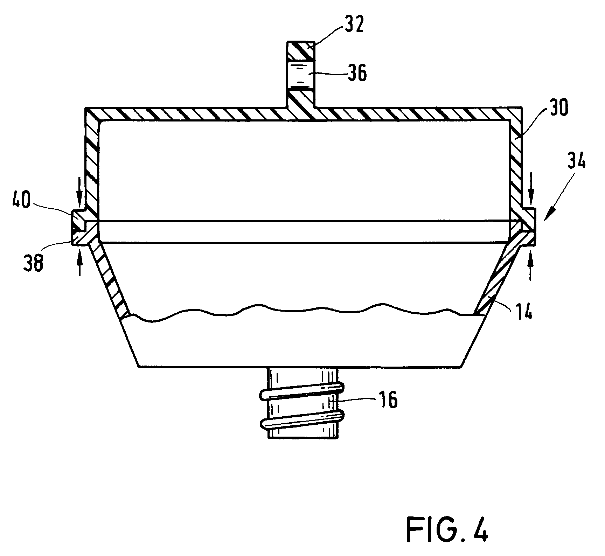

Der im Pressenwerkzeug 10 hergestellte Teilkörper 14 wird mit einem zweiten Teilkörper 30 in der in Fig. 4 der Zeichnung dargestellten Weise zu einem fertigen Hohlkörper verbunden, bei dem es sich beispielsweise um einen Flüssigkeitsbehälter für ein Kraftfahrzeug handeln kann. Der zweite Teilkörper 30 kann in analoger Weise, also durch Preßformen, hergestellt werden, wobei ein äußerer Fortsatz 32 einstückig angeformt ist, der eine Öse oder dgl. bildet, mittels welcher der resultierende Hohlkörper 34 beispielsweise im Motorraum eines Kraftfahrzeuges befestigt werden kann. Die Bildung der Öffnung 36 setzt ebenfalls das Vorhandensein eines Dornes analog dem Dorn 28 in den für die Herstellung des Teilkörpers 30 verwendeten Werkzeug voraus, wobei dieser Dorn dann jedoch in einer Ebene verläuft, die, bezogen auf die Darstellung der Fig. 1 - 3, rechtwinklig zu der Ebene verläuft, in welcher sich die Längsachse des Dornes 28 befindet.

An beiden Teilkörpern 14, 30 ist jeweils ein umlaufender Rand 38, 40 angeformt. Beide Ränder 38, 40 werden beim Verbinden der beiden Teilkörper 34, 30 aneinandergelegt und beispielsweise mittels Spiegelschweißen miteinander verbunden, so daß der resultierende Hohlkörper 34 gemäß Fig. 4 entsteht. Dabei können, wie dies Fig. 4 erkennen läßt, beide Ränder 38, 40 eine Querschnittsform aufweisen, die einen gewissen Formschluß bewirkt und so das Zustandekommen einer festen Verbindung begünstigt.

Der Hohlkörper 34 kann z.B. eine in Draufsicht runde oder quadratische Kontur aufweisen.

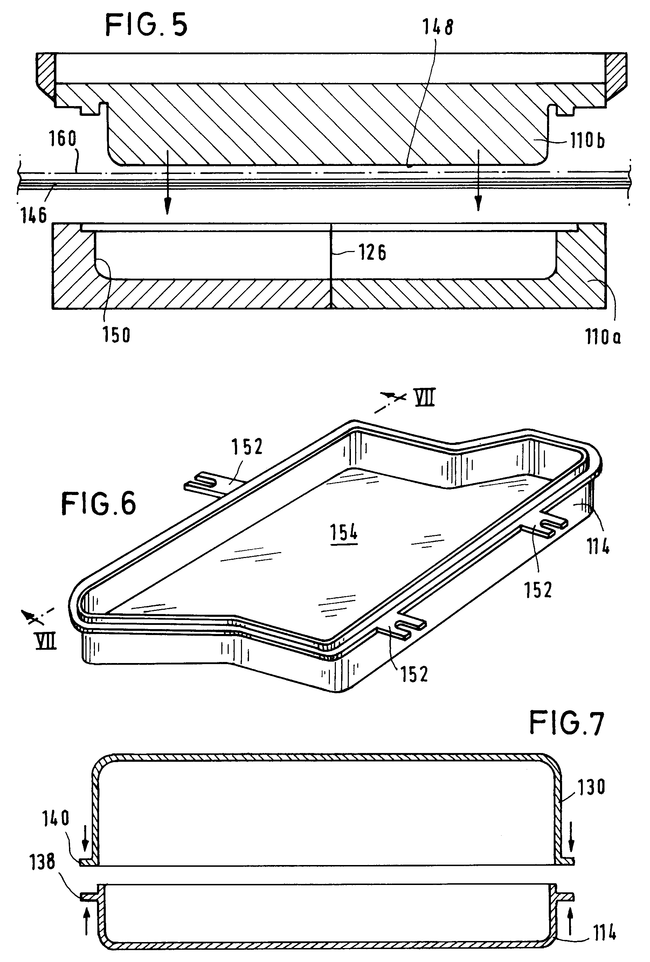

Beim Ausführungsbeispiel gemäß den Fig. 5 - 7 sind Teile, die mit jenen des Ausführungsbeispiels gemäß Fig. 1 - 4 übereinstimmen, mit gleichen, jedoch jeweils um 100 höheren Bezugszeichen versehen.

Das Werkzeug 110 des Ausführungsbeispiels gemäß den Fig. 5 - 7 besteht ebenfalls in üblicher Weise aus einer Matrize 110a und einem Gesenk 110b. Der wesentliche Unterschied zwischen beiden Ausführungsformen besteht darin, daß beim zweiten Ausführungsbeispiel ein Plattenmaterial 146 als Ausgangsmaterial verwendet wird, welches im Werkzeug 110 der Presse zum Teilkörper 114 umgeformt wird. Auch hier kann die Matrize 110a entlang einer Teilungsebene 126 unterteilt sein, um das Herausnehmen des Teilkörpers 114 aus dem Werkzeug 110 zu erleichtern. Insbesondere Fig. 6 läßt erkennen, daß sich unter Verwendung des Preßverfahrens auch solche Teilkörper und somit auch solche Gesamt-Hohlkörper herstellen lassen, die weniger gleichmäßig geformt als der z. B. etwa quadratische Teilkörper gemäß den Fig. 1 - 4. Auch hier gilt, daß durch entsprechende Formgebung der beim Preßvorgang zusammenwirkenden Teile, insbesondere also durch ensprechende Wahl des Verlaufs der Begrenzungsflächen 148, 150 der Werkzeugteile 110a, 110b, die Wanddicke des herzustellenden Teilkörpers 114 entsprechend den Erfordernissen ausgebildet sein kann derart, daß an Stellen größerer Beanspruchung eine stärkere Wanddicke vorhanden ist als in Bereichen, die weniger stark beansprucht sind. Dies gilt beispielsweise auch für die Ränder 38 und 40 bzw. 138, 140.

Fig. 6 läßt erkennen, daß an den Teilkörper 114 Halterungsteile 152 ebenfalls einstückig beim Preßvorgang angeformt werden.

Fig. 7 zeigt, daß der Teilkörper 114 ebenfalls mit einem zweiten Teilkörper 130 zu einem Gesamt-Hohlkörper verbunden werden kann, bei dem es sich beispielsweise um einen Tank für ein Kraftfahrzeug handelt. Dabei besteht die Möglichkeit, beispielsweise am Teilkörper 114 und/oder am Teilkörper 130 zusätzliche Funktionsteile auch innenseitig anzubringen, beispielsweise einen Schwalltopf, der zur Aufnahme der Benzinpumpe dienen kann. Ein solcher Schwallkopf kann einstückig angeformt sein, wobei natürlich Voraussetzung ist, daß das Zwischenerzeugnis, aus welchem der Teilkörper hergestellt wird, in dem jeweiligen Bereich eine ausreichende Materialmenge für das Anformen eines solchen Funktionsteiles aufweist. Es ist aber auch möglich, in einem gesonderten Arbeitsgang ein getrennt hergestelltes Funktionsteil beispielsweise auf der Bodenfläche 154 des Teilkörpers 114 anzuschweißen, bevor der Teilkörper 114 mit dem Teilkörper 130 zum Gesamtkörper verbunden wird. Es bedarf keiner näheren Erläuterung, daß dies wesentlich einfacher ist als bei einem im Extrusions-Blasverfahren hergestellten Hohlkörper, in dessen Innenraum Manipulationen wie beispielsweise das Anbringen irgendwelcher Teile nur durch relativ kleine Öffnungen in der Wandung des Hohlkörpers durchgeführt werden können.

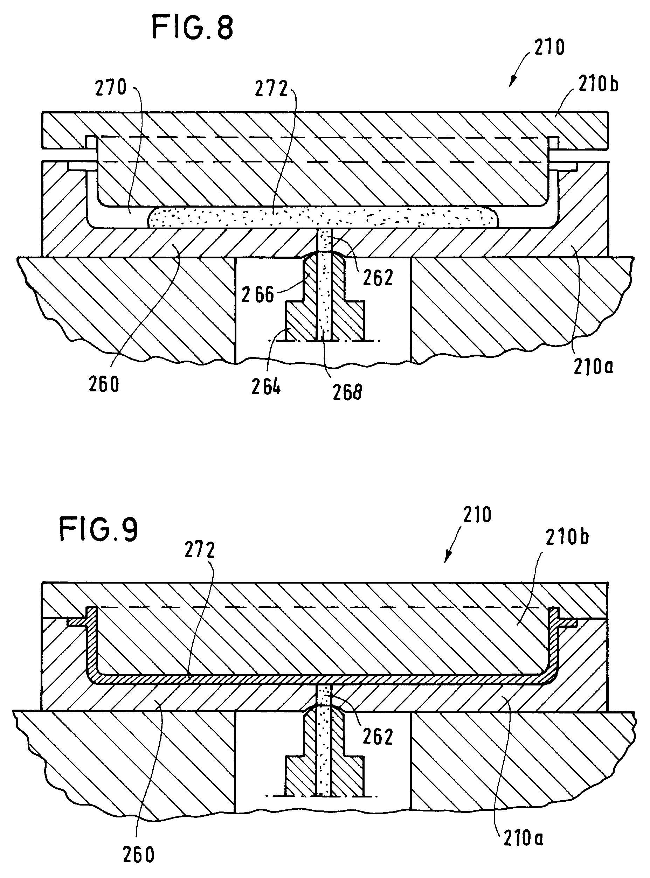

Das in den Fig. 8 und 9 dargestellte Pressenwerkzeug 210 besteht ebenfalls aus Matrize 210a und Gesenk 210b. Es dient der Herstellung eines Teilkörpers etwa der in Fig. 6 dargestellten Art. Dieser Teilkörper ist so gestaltet, daß es nicht unbedingt erforderlich ist, die Matrize 210a zwei- oder mehrteilig auszubilden, um den gepreßten Teilkörper nach ausreichender Verfestigung aus der Matrize 210a herauszunehmen. Deshalb ist beim Ausführungsbeispiel gemäß den Fig. 8 und 9 die Matrize einstückig ausgebildet. Sie ist im Bodenbereich 260 mit einem Zuführungskanal 262 versehen, durch den das thermoplastische Ausgangsmaterial in das Pressenwerkzeug 210 eingespritzt wird. Bei dieser Ausführungsform ist dem Pressenwerkzeug 210 ein einen nicht dargestellten Extruder und einem Düsenkopf 264 mit Düsenteil 266 aufweiesende Einheit zugeordnet, in welcher das thermoplastische Material in der üblichen Weise plastifiziert wird. Zum Zwecke des Einspritzens des im Werkzeug 210 durch Pressen zu formenden Kunststoffes in das Werkzeug wird die vorerwähnte Einheit mit ihrem Düsenteil 266 gemäß der Darstellung der Fig. 8 zur Anlage an der Matrize 210a gebracht derart, daß der Durchgang 268 im Düsenkopf 264 mit dem Zuführungskanal 262 in der Matrize 210a fluchtet. Dabei befindet sich das Gesenk 210b in einer Zwischenposition innerhalb der Matrize 210a, in der es sich etwas oberhalb der Position befindet, die es am Ende des Preßvorganges einnimmt. Dies bedeutet, daß der von Matrize 210a und Gesenk 210b begrenzte Raum 270 innerhalb des Werkzeuges 210 größer ist und auch einen größeren Querschnitt aufweist als in der relativen Endposition der beiden Teile 210a, 210b. In dieser Position wird durch den Durchgang 286 im Düsenkopf 264 und den Zuführungskanal 262 in der Matrize 210a Kunststoff in das Werkzeug 210 eingespritzt, wobei während dieses Vorganges das Werkzeug 210 in etwa die Funktion einer Spritzgießform übernimmt. Dabei weist jedoch der Raum 270 im Werkzeug einen Querschnitt auf, der größer ist als der Querschnitt, der sich am Ende des Preßvorganges einstellt. Dies ist die Position gemäß Fig. 9 der Zeichnung. Aufgrund dieser beim Einspritzvorgang größeren Querschnitte können somit auch Kunststoffe in das Werkzeug 210 eingespritzt werden, die eine größere Viskosität aufweisen als die üblicherweise beim Spritzgießen verwendeten thermoplastischen Kunststoffe.

Fig. 8 zeigt den Zustand am Ende des Spritzvorganges. Dabei ist der Raum 270 im Werkzeug 210 nur im Bereich 272 gefüllt. Durch das anschließende relative Verschieben der beiden Werkzeugteile 210a, 210b in die Position gemäß Fig. 9 wird ein Teil des Materials aus dem Bereich 272 in die nach Beendigung des Spritzvorganges noch leeren Bereiche innerhalb des Werkzeuges 210 verdrängt, so daß am Ende des Preßvorganges gemäß der Darstellung der Fig. 9 der in der Endposition der beiden Werkzeugteile 210a, 210b von diesen begrenzte Raum mit thermoplastischem Kunststoff gefüllt ist.

Um zu verhindern, daß beim Preßvorgang Material aus dem Bereich 272 durch den Zuführungskanal 262 nach außen verdrängt wird, kann der Düsenkopf 264 mit Düsenteil 266 auch während des Preßvorganges die in Fig. 8 der Zeichnung dargestellte Position beibehalten. Es ist aber auch möglich, anstelle des Düsenkopfes mit Düsenteil 266 ein anderes Verschlußteil in eine Position zu bringen, in welcher der Zuführungskanal 262 verschlossen wird. Die dazu erforderlichen Mittel und Maßnahmen sind dem Fachmann bekannt.

Das Spritzpressen hat den Vorteil, daß, wie beispielsweise bei dem Ausführungsbeispiel gemäß Fig. 8 und 9, das Ausgangsmaterial in den Bereich 272 des Werkzeuges hinein an einer Stelle zugeführt werden kann, an welcher eine möglichst gleichmäßige Verteilung innerhalb des Werkzeuges erfolgt, so daß auch bei dieser Ausführungsform das thermoplastische Material, welches für den Preßvorgang bereitgestellt wird, entsprechend der Gestalt des herzustellenden Teilkörpers im Werkzeug verteilt ist. Es besteht auch ohne weiteres die Möglichkeit, Material an zwei oder mehr Stellen in das Werkzeug einzuspritzen. Allerdings wird dies im allgemeinen nur dann erforderlich sein, wenn sehr große Teilkörper herzustellen sind. - Selbstverständlich ist es auch möglich, beim Spritzpreßverfahren das Werkzeug, insbesondere die Matrize 210a, analog beispielsweise dem Ausführungsbeispiel gemäß Fig. 5 zwei- oder mehrteilig auszubilden.

In Fig. 5 ist unterhalb des plattenförmigen Zwischenerzeugnisses 146 das Vorhandensein einer Folie 160 angedeutet, die als Mehrschichtfolie ausgebildet sein kann, bei welcher zumindest eine Schicht als Barriereschicht ausgebildet ist. Die Folie 160 bildet jedenfalls dann, wenn die einander zugekehrten Flächen des Zwischenerzeugnisses 146 und der Folie 160 aus miteinander verschweißbarem Material bestehen, am fertigen Teilkörper 114 die innere Begrenzungsschichtt, die dann einstückiger Bestandteil dieses Teilkörpers 114 ist. Der Teilkörper 130 kann in entsprechender Weise ausgebildet sein, so daß aus den beiden Teilkörpern 114, 130 ein Gesamt-Hohlkörper entsteht, dessen Wandungen für den Inhalt des Gesamt-Hohlkörpers bzw. für Komponenten des Inhaltes und/oder für die Außenatmosphäre bzw. Komponenten derselben undurchlässig ist. Derartige mit einer Barriereschicht versehenen Hohlkörper können selbstverständlich auch im Extrusions-Blasverfahren hergestellt werden (vgl. z. B. EP-OS 0 110 493). Der dazu erforderliche maschinelle Aufwandung ist jedoch außerordentlich groß, zumal das Vorhandensein einer Barriereschicht im Normalfall, insbesondere bei Verwendung der üblichen Kunststoffe wie Polyäthylen für das Zwischenerzeugnis 146, auch die Verwendung von Zwischenschichten erforderlich macht, die als Haftvermittler dienen und ein Haften der Barriereschicht an den benachbarten Kunststoffschichten aus anderen Materialien bewirken. Diese Zusammenhänge sind bekannt und bedürfen keiner weiteren Erläuterung.

Es ist natürlich auch möglich, bei Verwendung von Plattenmaterial als Zwischenerzeugnis 146 dieses Plattenmaterial von vornherein mehrschichtig, also beispielsweise mit einer Barriereschicht, auszubilden. In diesem Fall ist die Anbringung einer zusätzlichen Folie im allgemeinen nicht erforderlich.

Andererseits kann die dann ggf. einschichtige Folie auch zu Dekorations- und/oder Kennzeichnungszwecken angebracht werden.

Bei allen Ausführungsbeispielen ist die Matrize oberseitig eben begrenzt, so daß auch die Begrenzungsfläche des Teilkörpers an seiner offenen Seite in einer Ebene liegt. Dies ist jedoch nicht unbedingt erforderlich. Vielmehr kann das Verfahren gemäß der Erfindung auch dann ausgeführt werden, wenn die Begrenzungsflächen von Matrize und/oder Gesenk beispielsweise zur Anpassung an bestimmte Gestaltungen des Gesamt-Hohlkörpers einen vom ebenen Verlauf abweichende Ausgestaltung aufweisen.

## Patentansprüche

1. Verfahren zum Herstellen von Hohlkörpern, insbesondere Behältern, aus thermoplastischem Kunststoff, bei welchem zunächst wenigstens zwei Teilkörper hergestellt und dann zu einem Gesamt-Hohlkörper zusammengefügt werden, dadurch gekennzeichnet, daß wenigstens einer der wenigstens zwei Teilkörper im Preßverfahren aus einem Ausgangsmaterial hergestellt wird, welches vor dem Preßvorgang und/oder im Verlauf desselben eine Plastifizierung erfährt, und der im Preßverfahren hergestellte Teilkörper durch Schweißen oder Kleben mit wenigstem einem weiteren Teilkörper zum Hohlkörper verbunden wird.

2. Verfahren nach Anspruch 1, dadurch gekennzeichnet, daß sämtliche Teilkörper des Gesamt-Hohlkörpers durch Pressen hergestellt werden.

3. Verfahren nach Anspruch 1, dadurch gekennzeichnet, daß während des Preßvorganges an wenigstens einem der Teilkörper Funktionsteile angeformt werden.

4. Verfahren nach Anspruch 1, dadurch gekennzeichnet, daß als Ausgangsmaterial für den Preßvorgang ein plattenförmiges Material verwendet wird.

5. Verfahren nach Anspruch 1, dadurch gekennzeichnet, daß als Ausgangsmaterial für den Preßvorgang wenigstens ein Kunststoff-Posten verwendet wird.

6. Verfahren nach Anspruch 1, dadurch gekennzeichnet, daß das Ausgangsmaterial für den Preßvorgang zuvor in das nicht ganz geschlossene Preßwerkzeug eingespritzt wird.

7. Verfahren nach Anspruch 5, dadurch gekennzeichnet, daß bei Verwendung eines strangförmigen Kunststoff-Postens dieser in der Preßform so angeordnet wird, daß er im wesentlichen in Richtung der größten Erstreckung der Preßform verläuft.

8. Verfahren nach Anspruch 1, dadurch gekennzeichnet, daß ein faserverstärkter Kunststoff für die Herstellung des wenigstens einen Teilkörpers verwendet wird.

9. Verfahren nach Anspruch 1, dadurch gekennzeichnet, daß beim Preßvorgang eine Folie vorzugsweise aus thermoplastischem Material mit dem sich dabei bildenden Teilkörper verbunden wird.

10. Verfahren nach Anspruch 9, dadurch gekennzeichnet, daß die Folie mehrschichtig ausgebildet ist und zumindest eine Schicht enthält, die für die umgebende Atmosphäre/oder das Füllgut des Behälters als Barriereschicht wirkt.

11. Verfahren nach Anspruch 4, dadurch gekennzeichnet, daß ein plattenförmiges Material verwendet wird, welches ein Laminat ist und wenigstens zwei Schichten aufweist, von denen eine als Barriereschicht ausgebildet sein kann.

12. Hohlkörper, der zumindest überwiegend aus thermoplastischem Kunststoff besteht und aus wenigstens zwei fest miteinander verbundenen Teilkörpern (14, 30; 114, 130) zusammengesetzt ist, dadurch gekennzeichnet, daß wenigstens einer der Teilkörper (14, 30; 114, 130) im Preßverfahren hergestellt ist.
